# EUROPEAN PATENT APPLICATION

(11) **EP 4 640 492 A1**
(43) Date of publication of application: **29.10.2025**
(21) Application number: 23919375.8
(22) Date of filing: 16.10.2023
(51) Int. Cl.: B60R 11/00, B60R 11/02

(54) **ADJUSTING DEVICE FOR ONBOARD SCREEN, ONBOARD SCREEN ASSEMBLY AND VEHICLE**

(30) Priority: 30.01.2023 CN 202310092323
(71) Applicant: BYD Company Limited, Shenzhen, Guangdong 518118 (CN)
(72) Inventor: CHEN, Xiangzhen, Shenzhen, Guangdong 518118 (CN); XIAO, Guanjia, Shenzhen, Guangdong 518118 (CN); SUN, Chong, Shenzhen, Guangdong 518118 (CN); ZHAO, Bingshen, Shenzhen, Guangdong 518118 (CN); XU, Zhengquan, Shenzhen, Guangdong 518118 (CN)
(74) Representative: Taor, Simon Edward William
(86) International application number: PCT/CN2023/124665
(87) International publication number: WO 2024/159811

(57) **Abstract**

An adjusting device (50) for an onboard screen, including a screen bracket (2) suitable for mounting an onboard screen (6); a multi-link mechanism (10), wherein the multi-link mechanism (10) is movably connected to the screen bracket (2), the multi-link mechanism (10) has an asymmetric structure, and the multi-link mechanism (10) is configured to drive the screen bracket (2) to deflect and translate towards the driver side or to deflect and translate towards the front passenger side. Further disclosed are an onboard screen assembly and a vehicle. By means of the adjusting device for the onboard screen, the onboard screen assembly and the vehicle, the problem of a large field of view obstruction when turning towards the driver side and the problem of a small gap between the screen and a combination switch and a steering wheel when turning towards the front passenger side are solved.

## Description

### CROSS-REFERENCE TO RELATED APPLICATIONS

The present disclosure claims priority to Chinese Patent Application No. 2023100923237, filed with the China National Intellectual Property Administration on January 30, 2023, and entitled "ADJUSTING DEVICE FOR ONBOARD SCREEN, ONBOARD SCREEN ASSEMBLY AND VEHICLE", which is incorporated herein by reference in its entirety.

### FIELD

The present disclosure relates to the field of automotive technology, and in particular, to an adjusting device for an onboard screen, an onboard screen assembly, and a vehicle.

### BACKGROUND

The left and right turning function of the automotive central control screen can not only improve the driver's comfort and driving safety when using the screen, but also provide the front passenger with a comfortable viewing angle of the screen, which can greatly improve the human-machine interaction performance. In the related art, due to the application of large screens and the limitation of the instrument panel styling, the field of view is largely blocked when turning towards the driver side, and the gap between the screen and the combination switch and steering wheel of the vehicle is small when turning towards the front passenger side, which is likely to cause interference.

### SUMMARY

The present disclosure is intended to resolve one of technical problems in the related art at least to some extent. To this end, the present disclosure provides an adjusting device for an onboard screen. The onboard screen can deflect towards the driver side or the front passenger side, which solves the problem of a large field of view obstruction when turning towards the driver side and the problem of a small gap between the screen and the combination switch and steering wheel when turning towards the front passenger side.

The present disclosure further provides an onboard screen assembly.

The present disclosure further provides a vehicle.

The adjusting device for the onboard screen according to the embodiment of the first aspect of the present disclosure includes: a screen bracket, configurable for mounting an onboard screen; a multi-link mechanism, the multi-link mechanism is movably connected to the screen bracket, the multi-link mechanism has an asymmetric structure, and the multi-link mechanism is configured to drive the screen bracket to deflect and translate towards the driver side or to deflect and translate towards the front passenger side, so as to achieve the adjustment of the onboard screen, the screen bracket is away from the driver side during the adjustment process.

The adjusting device for the onboard screen according to the embodiment of the present disclosure, the multi-link mechanism has an asymmetric structure, the multi-link mechanism can drive the screen bracket to deflect and translate towards the driver side or to deflect and translate towards the front passenger side. When the onboard screen turns towards the driver side, the onboard screen will shift towards the front passenger side. When it turns towards the front passenger side, the screen will also shift towards the front passenger side. This effectively solves the problem of a large field of view obstruction when turning towards the driver side, and at the same time solves the problem of a small gap between the screen and the combination switch and steering wheel when turning towards the front passenger side.

According to some embodiments of the present disclosure, the multi-link mechanism includes: a first link mechanism and a second link mechanism, the second link mechanism and the first link mechanism are asymmetrically arranged relative to the screen bracket and are connected, and the motion strokes of the second link mechanism and the first link mechanism are different, so as to achieve the adjustment of the onboard screen.

According to some embodiments of the present disclosure, the first link mechanism includes a first link, and one end of the first link is movably connected to one side of the screen bracket; and the second link mechanism includes a second link and a third link, one end of the second link is movably connected to the other side of the screen bracket, the third link is movably connected between the first link and the second link, and the motion strokes of the first link and the second link are different.

According to some embodiments of the present disclosure, the first link mechanism further includes a first driving assembly, and the first driving assembly drives the first link to perform translational motion; and the second link mechanism further includes a second driving assembly, and the second driving assembly drives the second link to perform deflection motion and translational motion towards the front passenger side, such that the moving stroke of the first link is different from the motion stroke of the second link.

According to some embodiments of the present disclosure, the first driving assembly includes a first driving member, a first transmission member, and a second transmission member, the first driving member is in transmission connection with the first transmission member, the second transmission member is arranged on the first transmission member and can move relative to the first transmission member, the second transmission member is movably connected to the other end of the first link; and the second driving assembly includes a second driving member, a third transmission member, and a fourth transmission member, the second driving member is in transmission connection with the third transmission member, the fourth transmission member is arranged on the third transmission member and can move relative to the third transmission member, the fourth transmission member is movably connected to the other end of the second link.

According to some embodiments of the present disclosure, the first transmission member is a first lead screw, the second transmission member is a first lead screw nut, the third transmission member is a second lead screw, and the fourth transmission member is a second lead screw nut.

According to some embodiments of the present disclosure, the central axis of the second lead screw is deflected towards the front passenger side, and the central axis of the first lead screw is parallel to the central axis formed between the front passenger and the driver.

According to some embodiments of the present disclosure, a connecting bolt is arranged at one end of both the first link and the second link, the first link and the second link are hinged to both sides of the screen bracket through the connecting bolt, and one end of the first lead screw nut is connected to the connecting bolt at one end of the first link, and one end of the second lead screw nut is connected to the connecting bolt at one end of the second link.

According to some embodiments of the present disclosure, further includes a controller, the controller is electrically connected to both the first driving assembly and the second driving assembly to control the start and stop of the first driving assembly and the second driving assembly.

According to some embodiments of the present disclosure, the controller is configured to control the rotation speeds or driving forces of the first driving assembly and the second driving assembly to be different, such that the moving stroke of the first link is different from the moving stroke of the second link.

According to some embodiments of the present disclosure, one end of the third link is movably connected to a position between the two ends of the second link and forms a triangle with the line connecting the two ends of the second link, and the other end of the third link is movably connected to a position between the two ends of the first link and forms a straight line with the line connecting the two ends of the first link.

According to some embodiments of the present disclosure, the position where the second link is connected to the third link is bent towards the third link, the second link is an irregularly shaped link, the first link is a straight link, and the third link is an arc-shaped link.

According to some embodiments of the present disclosure, the angle at which the screen bracket deflects towards the driver side and/or deflects towards the front passenger side is α, and α satisfies the relationship: 0°<α≤15°.

According to some embodiments of the present disclosure, the screen bracket includes a rotating mechanism, one end of the rotating mechanism is configured to connect with the onboard screen, and the rotating mechanism is configured to drive the onboard screen to rotate around its center.

According to some embodiments of the present disclosure, the rotating mechanism includes: a third driving assembly, and a rotating disk, one end of the rotating disk is in transmission connection with the third driving assembly, and the other end is configured to connect with the onboard screen, the third driving assembly drives the rotating disk to rotate, so as to drive the onboard screen to rotate.

An onboard screen assembly according to the embodiment of the second aspect the present disclosure includes: an onboard screen; and the adjusting device for the onboard screen according to any one of the embodiments of the first aspect of the present disclosure, and the onboard screen is fixed on the screen bracket.

A vehicle according to the embodiment of the third aspect of the present disclosure includes: the onboard screen assembly according to the embodiment of the second aspect of the present disclosure and a mounting base, and the onboard screen assembly is fixed on the vehicle through the mounting base.

The additional aspects and advantages of the present disclosure are partially provided in the following descriptions, some of which will become apparent from the following descriptions or may be learned from practices of the present disclosure.

### BRIEF DESCRIPTION OF THE DRAWINGS

The above and/or additional aspects and advantages of the present disclosure will become apparent and easy to understand from the description of the embodiments in combination with the following figures, in which:
FIG. 1 is a schematic structural diagram of an onboard screen assembly according to an embodiment of the present disclosure.
FIG. 2 is a schematic structural diagram of an onboard screen assembly with the mounting base hidden according to an embodiment of the present disclosure.
FIG. 3 is an exploded schematic diagram of an onboard screen assembly according to an embodiment of the present disclosure.
FIG. 4 is a schematic structural diagram of an onboard screen assembly deflecting to the left side according to an embodiment of the present disclosure.
FIG. 5 is a schematic structural diagram of an onboard screen assembly deflecting to the right side according to an embodiment of the present disclosure.
FIG. 6 is a schematic structural diagram of a screen bracket according to an embodiment of the present disclosure.
FIG. 7 is a schematic block diagram of a vehicle according to an embodiment of the present disclosure.

### Figure symbols:

Onboard screen assembly 100, adjusting device 50 for an onboard screen, multi-link mechanism 10, mounting base 1, screen bracket 2, housing 21, rotating mechanism 22, third driving assembly 221, worm gear and worm 221a, third driving member 221b, rotating disk 222, convex ring 223, large gear 224, spring snap ring 225, first link mechanism 3, first link 31, first driving assembly 32, first driving member 321, first transmission member 322, second transmission member 323, second link mechanism 4, second link 41, second driving assembly 42, second driving member 421, third transmission member 422, fourth transmission member 423, third link 5, controller 304, onboard screen 6, connecting bolt 7, bushing 8, vehicle 1000.

### DETAILED DESCRIPTION

The embodiments of the present disclosure are described below in detail. The embodiments described with reference to the accompanying drawings are exemplary.

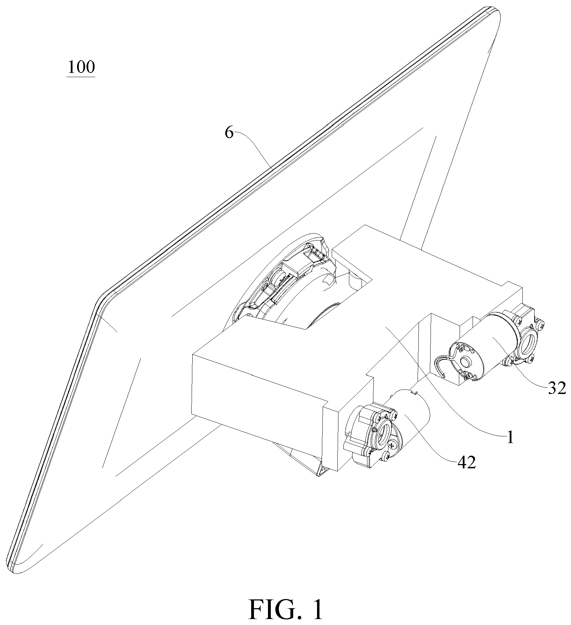

The following describes an adjusting device 50 for an onboard screen according to an embodiment of the present disclosure with reference to FIG. 1 to FIG. 6. In addition, the present disclosure also proposes an onboard screen assembly 100 and a vehicle that are equipped with the above-mentioned adjusting device 50 for the onboard screen.

As shown in FIG. 1 to FIG. 6, the adjusting device 50 for the onboard screen includes: a screen bracket 2 and a multi-link mechanism 10. Among them, the screen bracket 2 is configurable for mounting an onboard screen 6.

The multi-link mechanism 10 is movably connected to the screen bracket 2, and the multi-link mechanism 10 has an asymmetric structure. The multi-link mechanism 10 is configured to drive the screen bracket 2 to deflect and translate towards the driver side or to deflect and translate towards the front passenger side, so as to achieve the adjustment of the onboard screen 6, the screen bracket 2 is away from the driver side during the adjustment process.

Specifically, the multi-link mechanism 10 has an asymmetric structure. When adjusting the onboard screen 6, the multi-link mechanism 10 can drive the screen bracket 2 to deflect and translate towards the driver side or to deflect and translate towards the front passenger side, and the screen bracket 2 is away from the driver side during the adjustment process. In this way, whether it deflects towards the driver side or towards the front passenger side, it can avoid the wiper switch, combination light switch, etc. on the side of the steering wheel. Thus, it solves the problem of a large field of view obstruction when turning towards the driver side, and at the same time solves the problem of a small gap between the onboard screen 6 and the combination switch and steering wheel when turning towards the front passenger side.

It should be noted that the multi-link mechanism 10 drives the screen bracket 2 to translate and deflect, which means that it can translate along one direction while deflecting towards another direction. In an embodiment of the present disclosure, taking the X-axis direction and the Y-axis direction in the vehicle's three-axis coordinate system as the reference, the multi-link mechanism 10 can drive the screen bracket 2 to translate along the Y-axis direction, and at the same time, deflect along the X-axis direction towards the driver side or the front passenger side, so that the screen bracket 2 deflects and translates towards the driver side or deflects and translates towards the front passenger side, thereby achieving the adjustment of the onboard screen 6.

Among them, the X-axis direction is the width direction of the vehicle, that is, the left-right direction, and the Y-axis direction is the length direction of the vehicle, that is, the front-rear direction.

Therefore, the motion form of the multi-link mechanism 10 is asymmetric, which enables the onboard screen to turn towards the driver side while shifting towards the front passenger side, or turn towards the front passenger side while shifting towards the front passenger side. In this way, it can effectively solve the problem of a large field of view obstruction when turning towards the driver side, and at the same time solve the problem of a small gap between the screen and the combination switch and steering wheel when turning towards the front passenger side. Compared with the existing mechanism that achieves the screen deflection by stacking multiple one-way movements, the motion mechanism of the adjusting device 50 for the onboard screen of the present disclosure is relatively simple and is not easily restricted by the shape of the instrument panel and the like.

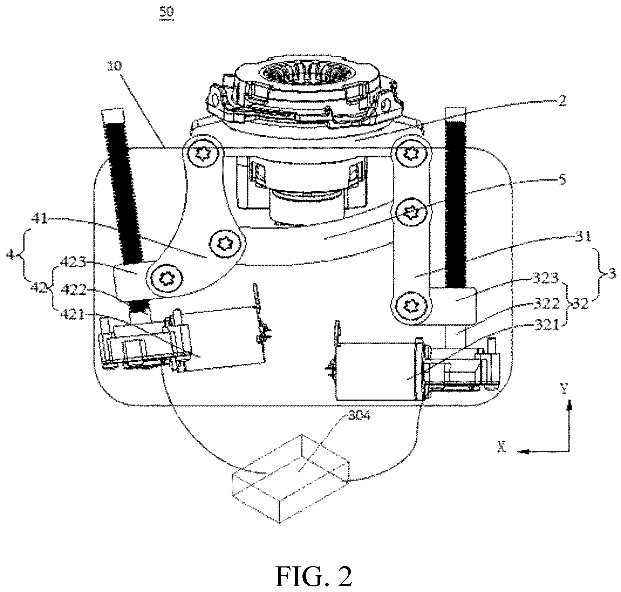

Specifically, the multi-link mechanism 10 includes a first link mechanism 3 and a second link mechanism 4, the first link mechanism 3 and the second link mechanism 4 are asymmetrically arranged relative to the screen bracket 2 and are connected, the motion strokes of the first link mechanism 3 and the second link mechanism 4 are different, so as to achieve the adjustment of the onboard screen 6. As shown in FIG. 2, the first link mechanism 3 and the second link mechanism 4 are designed to have an asymmetric structure. Among them, the curved structure of the second link mechanism 4 allows the screen bracket 2 to stay away from the driver side during the adjustment process. Moreover, due to the different motion strokes of the first link mechanism 3 and the second link mechanism 4, the first link mechanism 3 and the second link mechanism 4 can drive the screen bracket 2 to deflect and translate towards the driver side, or to deflect and translate towards the front passenger side.

Furthermore, the first link mechanism 3 includes a first link 31, and one end of the first link 31 is movably connected to one side of the screen bracket 2. The second link mechanism 4 includes a second link 41 and a third link 5, one end of the second link 41 is movably connected to the other side of the screen bracket 2, the third link 5 is movably connected between the first link 31 and the second link 41. In this way, the third link 5, the first link 31, the second link 41 and the screen bracket 2 form a multi-link mechanism. The third link 5 enables the first link 31 and the second link 41 to drive the screen bracket 2 to move along a unique trajectory, ensuring the movement stability of the multi-link mechanism.

Moreover, the motion strokes of the first link 31 and the second link 41 are different. That is, by controlling the motion strokes of the first link 31 and the second link 41 to be different and generating a stroke difference, the screen bracket 2 can be driven to deflect and translate towards the driver side, or to deflect and translate towards the front passenger side.

Specifically, in the embodiment of the present disclosure, the first link 31 and the second link 41 can be respectively arranged on the left and right sides of the screen bracket 2. The first link 31 can perform a translational motion along the Y-axis direction, while the second link 41 can perform a translational motion along the Y-axis direction and at the same time perform a deflection motion along one side (the driver side or the front passenger side) in the X-axis direction. Based on the above asymmetric motion forms of the first link 31 and the second link 41, the screen bracket 2 can move away from the driver side during the adjustment process. Specifically, when turning towards the driver side, the screen bracket 2 shifts towards the front passenger side; when turning towards the front passenger side, the screen bracket 2 also shifts towards the front passenger side. In this way, it effectively solves the problem of a large field of view obstruction when turning towards the driver side, and at the same time solves the problem of a small gap between the screen and the combination switch and steering wheel when turning towards the front passenger side, thereby achieving the deflection of the onboard screen 6 towards the driver side or the front passenger side.

Certainly, the first link 31 and the second link 41 can also be respectively arranged on the upper and lower sides of the screen bracket 2. When the first driving assembly 32 drives the first link 31 to move and the second driving assembly 42 drives the second link 41 to move, the onboard screen 6 can also be deflected upwards or downwards.

Further, the first link mechanism 3 further includes a first driving assembly 32. The first driving assembly 32 drives the first link 31 to perform translational motion. The second link mechanism 4 further includes a second driving assembly 42. The second driving assembly 42 drives the second link 41 to perform deflection motion and translational motion towards the front passenger side, such that the moving stroke of the first link 31 is different from the motion stroke of the second link 41. It can be understood that one side of the screen bracket 2 is movably connected to one end of the first link 31, and the first driving assembly 32 drives the first link 31 to perform translation. Correspondingly, the other side of the screen bracket 2 is movably connected to one end of the second link 41, and the second driving assembly 42 drives the second link 41 to perform translation and deflection towards the front passenger side.

Further, the first link 31 can translate forward, and the second link 41 can move forward and deflect to left/right. The motion strokes of the first link 31 and the second link 41 can be adjusted through the output speeds of the first driving assembly 32 and the second driving assembly 42, so that there is a difference in the speeds of the first link 31 and the second link 41. In this way, within the same working time, the strokes of the first link 31 and the second link 41 are different. The stroke difference generated by the first link 31 and the second link 41 can be reflected on the onboard screen 6 through the screen bracket 2, thereby achieving the deflection of the onboard screen 6 towards the driver side or the front passenger side.

It should be noted that the forward movement mentioned above refers to the movement towards the rear of the vehicle in the Y-axis direction.

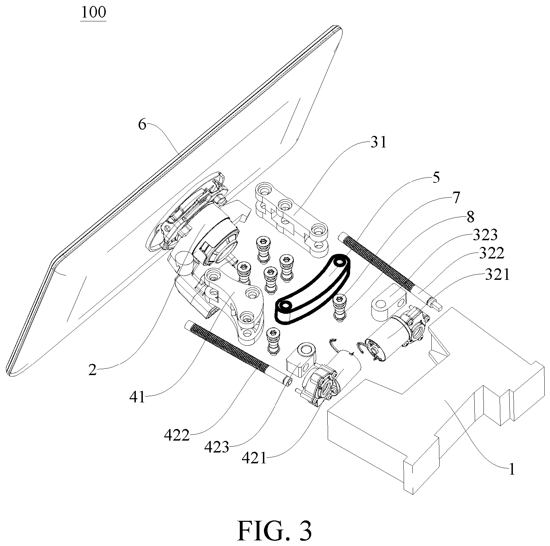

Optionally, in the embodiment of the present disclosure, one end of each of the first link 31 and the second link 41 is provided with a connecting bolt 7. As shown in FIG. 3, the first link 31 and the second link 41 are hinged to both sides of the screen bracket 2 through the connecting bolt 7.

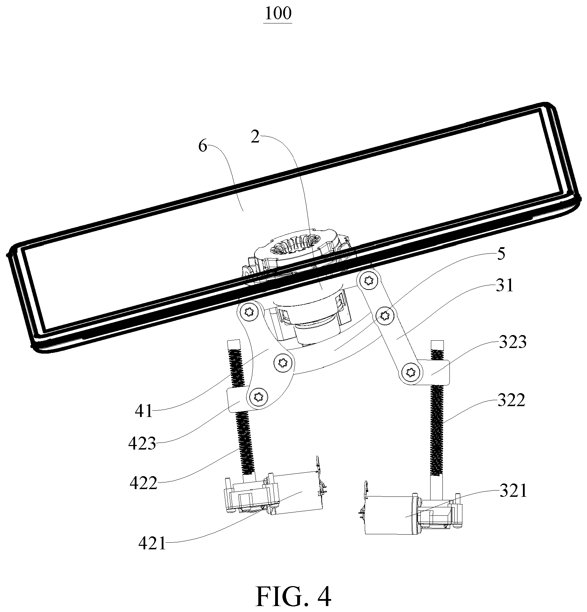

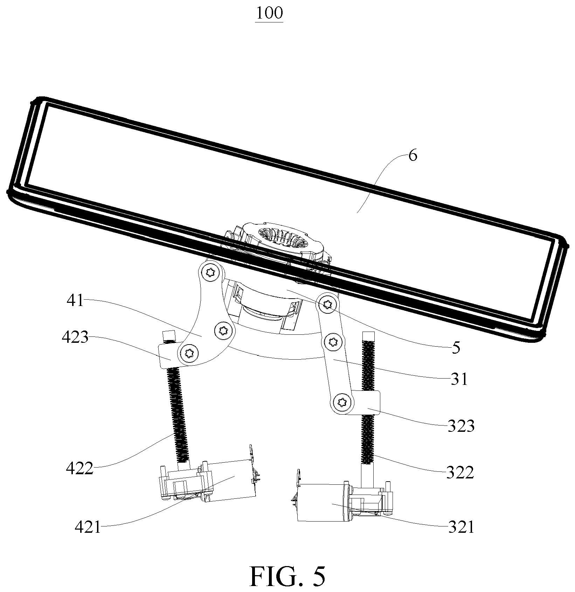

For example, when the onboard screen 6 needs to be deflected towards the driver side, the first driving assembly 32 on the side closer to the driver drives the first link 31 to move a relatively short distance, while the second driving assembly 42 on the side farther from the driver drives the second link 41 to move a relatively long distance. This allows the screen bracket 2 and the onboard screen 6 to deflect towards the driver side, as shown in FIG. 5. Similarly, when the onboard screen 6 needs to be deflected towards the front passenger side, the second driving assembly 42 on the side closer to the front passenger drives the second link 41 to move a relatively short distance, while the first driving assembly 32 on the side farther from the front passenger drives the first link 31 to move a relatively long distance. This enables the screen bracket 2 and the onboard screen 6 to deflect towards the front passenger side, as shown in FIG. 4. Moreover, since the first link 31 can translate and the second link 41 can translate and deflect towards the front passenger side, the screen bracket 2 can always stay away from the driver side during the adjustment process. This solves the problem of a large field of view obstruction when turning towards the driver side and the problem of a small gap between the screen and the combination switch and steering wheel when turning towards the front passenger side.

Compared with the adjustment assembly that rotates around a fixed central axis or moves in a straight line, and whose increase in motion forms is achieved by stacking multiple one-way motions, in the present disclosure, the deflection is achieved through the virtual central axis formed by the first link 31 and the second link 41. There is no need to stack multiple one-way motions, which greatly simplifies the motion structure and facilitates production and use.

In some embodiments, the first driving assembly 32 includes a first driving member 321, a first transmission member 322, and a second transmission member 323. The first driving member 321 is in transmission connection with the first transmission member 322. The second transmission member 323 is arranged on the first transmission member 322 and can move relative to the first transmission member 322. The second transmission member 323 is movably connected to the other end of the first link 31.

In this way, the first driving member 321 is in transmission connection with the first transmission member 322, and the second transmission member 323 is arranged on the first transmission member 322. When the first driving member 321 drives the first transmission member 322 to rotate, the second transmission member 323 can move on the first transmission member 322, thereby driving the first link 31 to translate along the Y-axis.

Specifically, when the first driving member 321 drives the first transmission member 322 to rotate, the output shaft of the first driving member 321 is in rotational cooperation with the first transmission member 322. Then, the second transmission member 323 moves on the first transmission member 322. At this time, the second transmission member 323 drives the first link 31, the screen bracket 2, and one side of the onboard screen 6 to translate along the Y-axis.

In addition, the second driving assembly 42 includes a second driving member 421, a third transmission member 422, and a fourth transmission member 423. The second driving member 421 is in transmission connection with the third transmission member 422. The fourth transmission member 423 is arranged on the third transmission member 422 and can move relative to the third transmission member 422. The fourth transmission member 423 is movably connected to the other end of the second link 41. Similar to the principle of the first driving assembly 32, driven by the second driving member 421, the fourth transmission member 423 moves on the third transmission member 422. This drives the second link 41, the screen bracket 2, and the other side of the onboard screen 6 to translate along the Y-axis and simultaneously deflect towards the front passenger side along the X-axis.

Specifically, the first transmission member 322 is a first lead screw, the second transmission member 323 is a first lead screw nut, the third transmission member 422 is a second lead screw, and the fourth transmission member 423 is a second lead screw nut, as shown in FIG. 3. In this way, the first driving member 321 can be a first motor. The output shaft of the motor is in transmission connection with the first lead screw, and the first lead screw nut is in helical engagement with the first lead screw. When the first motor is started, the first lead screw rotates in place, and the first lead screw nut rotates helically on the first lead screw, thereby driving the first link 31, the screen bracket 2, and one side of the onboard screen 6 to translate. The third transmission member 422 and the fourth transmission member 423 are symmetrically arranged on both sides of the screen bracket 2 with respect to the first transmission member 322 and the second transmission member 323. Similarly, the second driving member 421 drives the second link 41, the screen bracket 2, and the other side of the onboard screen 6 to translate and deflect.

Moreover, one end of the first lead screw nut is connected to the connecting bolt 7 at one end of the first link 31. Similarly, one end of the second lead screw nut is connected to the connecting bolt 7 at one end of the second link 41.

Of course, the first driving assembly 32 may also only include the first driving member 321 and the first transmission member 322, and the first transmission member 322 is movably connected to the other end of the first link 31. When the first driving member 321 drives the first transmission member 322, the first transmission member 322 can move instead of rotating in place, thereby driving the first link 31 to translate. The second driving assembly 42 may also only include the second driving member 421 and the third transmission member 422, and the third transmission member 422 is movably connected to the other end of the second link 41. When the second driving member 421 drives the third transmission member 422, the screen bracket 2 and the onboard screen 6 deflect towards the driver side or the front passenger side.

The central axis of the second lead screw is deflected towards the front passenger side, while the central axis of the first lead screw is parallel to the central axis formed between the front passenger and the driver. In this way, since the first lead screw and the second lead screw are not arranged in parallel and the central axis of the second lead screw is deflected towards the front passenger side, the onboard screen 6 can shift towards the front passenger side while turning towards the driver side, or the onboard screen 6 can shift towards the front passenger side while turning towards the front passenger side. This not only solves the problem of a large field of view obstruction when the onboard screen turning towards the driver side but also solves the problem of a small gap between the screen and the combination switch and steering wheel when the onboard screen turning towards the front passenger side.

In addition, the moving directions of the first lead screw nut on the first lead screw and the second lead screw nut on the second lead screw can be made different, so that the final position of the first lead screw nut's movement and the final position of the second lead screw nut's movement are not in the same X-axis direction. In this way, even if the output speeds of the first driving member 321 and the second driving member 421 are the same, by changing the extension directions of the first lead screw and the second lead screw, the first link 31 and the second link 41 can also drive the screen bracket 2 and the onboard screen 6 to deflect. Of course, the output speeds of the first driving member 321 and the second driving member 421 can also be combined to enable the first link 31 and the second link 41 to drive the screen bracket 2 to deflect quickly.

More specifically, the first lead screw is located on the side closer to the driver, and its extension direction is parallel to the Y-axis direction of the vehicle (i.e., the front-rear direction); the second lead screw is located on the side closer to the front passenger, and its extension direction is deflected towards the front passenger side, forming a certain angle with the first lead screw. In this way, the first lead screw and the second lead screw form an asymmetrical structure, enabling the onboard screen 6 to shift towards the front passenger side while turning towards the driver side, and shift towards the front passenger side while turning towards the front passenger side.

In some embodiments, one end of the third link 5 is movably connected to a position between the two ends of the second link 41 and forms a triangle with the line connecting the two ends of the second link 41; the other end of the third link 5 is movably connected to a position between the two ends of the first link 31, and forms a straight line with the line connecting the two ends of the first link 31. Since the second lead screw on one side of the second link 41 is designed to be deflected at a certain angle, the line connecting the two ends of the second link 41 and one end of the third link 5 forms a triangle, which facilitates the deflection of the second link 41 and the third link 5 towards the driver side or the front passenger side.

Specifically, the first link 31 is a straight link; the second link 41 is an irregularly shaped link because the position where it connects to the third link 5 is bent towards the third link 5; the third link 5 is an arc-shaped link. In this way, designing the second link 41 as an irregularly shaped link structure is not only beneficial for the screen bracket 2 to stay away from the driver side during the adjustment process, but also beneficial for adjusting the onboard screen 6 to deflect towards the driver side.

In an embodiment of the present disclosure, the first link 31 can be split into upper and lower castings for processing and then connected into one piece by three hinge bolts. The first link 31 is connected to the hinge bolts through two bushings 8, which can reduce wear. The front end of the first link 31 is connected to one side of the screen bracket 2 through a hinge bolt and two bushings 8. The middle part of the first link 31 is connected to the third link 5 through a hinge bolt and two bushings 8, and the third link 5 is connected to the second link 41 through a hinge bolt and two bushings 8.

In some embodiments, the adjusting device 50 for the onboard screen further includes a controller 304. The controller 304 is electrically connected to the first driving assembly 32 and the second driving assembly 42 respectively to control the start and stop of the first driving assembly 32 and the second driving assembly 42. The controller is specifically configured to control the first driving assembly 32 and the second driving assembly 42 to rotate at different speeds, so that the moving stroke of the first link 31 is different from the moving stroke of the second link 41. That is, by controlling the different rotation speeds of the first driving assembly 32 and the second driving assembly 42, under the same time condition, the moving stroke of the first link 31 can be made different from the moving stroke of the second link 41, thereby achieving the adjustment of the onboard screen 6.

Specifically, when the controller 304 receives a signal indicating deflection towards the front passenger side, the rotation speed of the first driving member 321 is controlled to be higher than that of the second driving member 421. After being powered on for a period of time, the first lead screw nut driven by the first driving member 321 moves to the end position of the first lead screw and touches the signal switch, causing the first driving member 321 and the second driving member 421 to be powered off. Meanwhile, the second lead screw nut driven by the second driving member 421 moves a shorter distance than that of the first lead screw nut. Under the push of the second lead screw nut and the restraint of the third link 5, the second link 41 makes an inward swinging motion, which is transmitted to the screen bracket 2. The first link 31 also makes a forward pushing motion under the push of the first lead screw nut and the restraint of the third link 5, which is transmitted to the screen bracket 2. Under the combined action of the first link 31 and the second link 41, the screen bracket 2 connected to the onboard screen 6 turns to the left and moves forward, thereby achieving the left deflection movement of the onboard screen 6, as shown in FIG. 4. Correspondingly, when the controller 304 receives a signal indicating deflection towards the driver side, the rotation speed of the second driving member 421 is higher than that of the first driving member 321, driving the second lead screw nut to move a longer distance than the first lead screw nut. The stroke difference is reflected on the onboard screen 6 via the screen bracket 2, thereby achieving the right deflection movement of the onboard screen 6, as shown in FIG. 5.

As shown in FIG. 4, the stroke of the second lead screw nut is approximately 36 mm, and the stroke of the first lead screw nut is approximately 64 mm. Under the restraint of the third link 5, the entire screen turns approximately 15° towards the front passenger side.

As shown in FIG. 5, the stroke of the second lead screw nut is approximately 58 mm, and the stroke of the first lead screw nut is approximately 38 mm. Under the restraint of the third link 5, the entire screen turns approximately 15° towards the driver side.

Therefore, by adjusting the strokes of the second lead screw nut and the first lead screw nut on the second lead screw and the first lead screw respectively, the lateral turning angle of the onboard screen 6 can be controlled under the restraint of the third link 5.

The movement time for the screen to turn towards the driver side and turn towards the front passenger side can both be set as fixed values, for example, approximately 2s. In order to achieve different motion strokes of the first lead screw nut and the second lead screw nut within the same time, it is necessary to adjust the movement speeds of the second lead screw nut and the first lead screw nut. Since the first lead screw nut is in threaded engagement with the first lead screw, and the second lead screw nut is in threaded engagement with the second lead screw, this adjustment depends on the rotation speeds of the first lead screw driven by the first driving member 321 and the second lead screw driven by the second driving member 421. The first driving member 321 and the second driving member 421 can be variable-speed motors. By adjusting the rotation speed of the motors through voltage regulation, the lateral turn of the onboard screen 6 towards the direction of the driver or the front passenger can be achieved.

In some embodiments, the angle at which the screen bracket 2 deflects towards the driver side or the front passenger side is α, where α satisfies the relationship: 0° < α ≤ 15°. In this way, when the onboard screen 6 is in the initial position, the onboard screen 6 is parallel to the X-axis direction of the vehicle, when the screen bracket 2 drives the onboard screen 6 to deflect towards the driver side or the front passenger side, the onboard screen 6 deflects at a certain angle relative to the X-axis direction of the vehicle, and this deflection angle is limited to the range of 0° to 15°, ensuring a good experience for both the driver and the front passenger.

In some embodiments, the screen bracket 2 includes a rotating mechanism 22. One end of the rotating mechanism 22 is configured to connect with the onboard screen 6, and the rotating mechanism 22 can drive the onboard screen 6 to rotate around its center. In this way, the rotating mechanism 22 can drive the onboard screen 6 to rotate around the housing 21 of the rotating mechanism 22, enabling the onboard screen 6 to rotate at any angle within 360°. That is, the onboard screen 6 can not only deflect towards the driver or front passenger side but also rotate 360°.

Moreover, the rotating mechanism 22 includes a third driving assembly 221 and a rotating disk 222. One end of the rotating disk 222 is in transmission connection with the third driving assembly 221, and the other end is configured to connect with the onboard screen 6. The third driving assembly 221 includes a third driving member 221b, the third driving member 221b drives the rotating disk 222 to rotate, so as to drive the onboard screen 6 to rotate. In this way, one end of the rotating disk 222 is in transmission connection with the third driving assembly 221, and the other end is fixedly connected to the onboard screen 6. When the third driving assembly 221 drives the rotating disk 222 to rotate around the housing 21 of the rotating mechanism 22, it can drive the onboard screen 6 to rotate.

For example, the third driving assembly 221 may include a third driving member 221b and a worm gear and worm 221a. The worm gear and worm 221a can change the direction of the output power of the third driving member 221b, so that the output direction of the worm gear and worm 221a is consistent with the axial direction of the rotating disk 222.

For example, the rotating mechanism 22 may further include a housing 21, a convex ring 223, a large gear 224, and a spring snap ring 225. The convex ring 223 and the large gear 224 are sequentially sleeved on the rotating disk 222 and are mounted on the housing 21 through the spring snap ring 225. In this way, it can be ensured that the rotating disk 222 rotates relative to the housing 21.

In some usage scenarios, if the driver finds that there is a reflection on the screen, by clicking the "turn left" control button on the steering wheel once, the display screen will directly turn 15° towards the driver, or by long pressing the "turn left" control button, the screen can stop at any position within the range of 0° to 15° during the process of turning towards the driver side.

Similarly, in some usage scenarios, when the front passenger needs to view the screen, the driver can click the "turn right" control button on the steering wheel once, and the display screen will directly turn 15° towards the front passenger, or by long pressing the "turn right" control button, the screen can stop at any position within the range of 0° to 15° during the process of turning towards the front passenger side. A separate control button can also be set at the front passenger's position, and the control of the screen's lateral turn can be achieved through the same control logic.

When it is necessary to return to the initial position, the operator only needs to click the "center/rotate" button once, and the screen will return to the initial horizontal position from either the left or right rotated state.

When the user needs to use navigation or some applications that require vertical screen operation, by double-clicking the "center/rotate" button, the switching operation between the horizontal and vertical screens can be achieved. For example, if the driver clicks "turn left" and double-clicks "center/rotate", the mechanism will turn towards the driver while the screen rotates around the center to switch between the horizontal and vertical screens, and the two actions will be carried out synchronously.

An onboard screen assembly 100 according to the embodiment of the second aspect of the present disclosure includes: an onboard screen 6 and the adjusting device 50 for the onboard screen, and the onboard screen 6 is fixed on the screen bracket 2. Through the operation of the rotating mechanism 22, the first driving assembly 32, and the second driving assembly 42, the integration of the lateral turning and rotation functions of the onboard screen assembly 100 can be achieved.

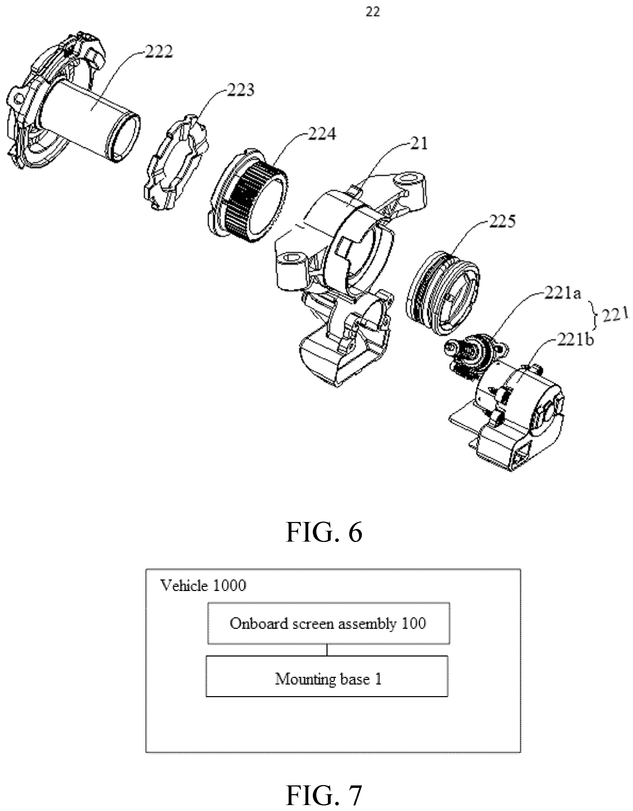

A vehicle 1000 according to the embodiment of the third aspect of the present disclosure, as shown in FIG. 7, includes: an onboard screen assembly 100 and a mounting base 1, and the onboard screen assembly 100 is fixed on the vehicle 1000 through the mounting base 1.

Specifically, multiple mounting holes are arranged on the mounting base 1. By fixedly connecting with the vehicle frame body through these multiple mounting holes, the entire onboard screen assembly 100 can be fixed. In addition, the first lead screw and the second lead screw are in interference fit with the mounting base 1 through bearings.

Therefore, by driving the first link 31 to move by the first driving assembly 32 and driving the second link 41 to move by the second driving assembly 42, the screen bracket 2 and the onboard screen 6 can be driven to deflect and translate towards the driver side or to deflect and translate towards the front passenger side, effectively solving the problem of large field of view obstruction when turning towards the driver side and the problem of a small gap between the screen and the combination switch and steering wheel when turning towards the front passenger side. Moreover, through the rotating mechanism 22, the 360° rotation of the onboard screen 6 can also be achieved, enabling arbitrary rotation between the horizontal and vertical screens. The onboard screen assembly 100 integrates both the lateral turning and rotation functions, improving the convenience of use.

In the description of the present disclosure, it should be understood that the terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", and "circumferential", etc. indicate orientation or positional relationships based on the orientation or positional relationships shown in the drawings, which are only for the convenience of describing the present disclosure and simplifying the description, and do not indicate or imply that the device or element referred to must have a specific orientation, be constructed and operated in a specific orientation, and therefore cannot be understood as limitations on the present disclosure.

In description of this specification, description of reference terms "an embodiment", "some embodiments", "illustrative embodiments", "examples", "specific examples", or "some examples" and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art should understand that various changes, modifications, replacements and variations may be made to the embodiments without departing from the principles and purposes of the present disclosure. The scope of the present disclosure is defined by the claims and their equivalents.

## Claims

1. An adjusting device (50) for an onboard screen, comprising:
a screen bracket (2), configurable for mounting an onboard screen (6); and
a multi-link mechanism (10), being movably connected to the screen bracket (2), the multi-link mechanism (10) having an asymmetric structure, the multi-link mechanism (10) being configured to drive the screen bracket (2) to deflect and translate towards the driver side or to deflect and translate towards the front passenger side, so as to achieve the adjustment of the onboard screen (6), the screen bracket (2) being away from the driver side during the adjustment process.

2. The adjusting device (50) for the onboard screen according to claim 1, wherein the multi-link mechanism (10) comprises:
a first link mechanism (3), and
a second link mechanism (4), the second link mechanism (4) and the first link mechanism (3) are asymmetrically arranged relative to the screen bracket (2) and are connected, and the motion strokes of the second link mechanism (4) and the first link mechanism (3) are different, so as to achieve the adjustment of the onboard screen (6).

3. The adjusting device (50) for the onboard screen according to claim 2, wherein
the first link mechanism (3) comprises a first link (31), and one end of the first link (31) is movably connected to one side of the screen bracket (2); and
the second link mechanism (4) comprises a second link (41) and a third link (5), one end of the second link (41) is movably connected to the other side of the screen bracket (2), the third link (5) is movably connected between the first link (31) and the second link (41), and the motion strokes of the first link (31) and the second link (41) are different.

4. The adjusting device (50) for the onboard screen according to claim 3, wherein the first link mechanism (3) further comprises a first driving assembly (32), and the first driving assembly (32) drives the first link (31) to perform translational motion; and
the second link mechanism (4) further comprises a second driving assembly (42), and the second driving assembly (42) drives the second link (41) to perform deflection motion and translational motion towards the front passenger side, such that the moving stroke of the first link (31) is different from the motion stroke of the second link (41).

5. The adjusting device (50) for the onboard screen according to claim 4, wherein
the first driving assembly (32) comprises a first driving member (321), a first transmission member (322), and a second transmission member (323), the first driving member (321) is in transmission connection with the first transmission member (322), the second transmission member (323) is arranged on the first transmission member (322) and can move relative to the first transmission member (322), the second transmission member (323) is movably connected to the other end of the first link (31); and
the second driving assembly (42) comprises a second driving member (421), a third transmission member (422), and a fourth transmission member (423), the second driving member (421) is in transmission connection with the third transmission member (422), the fourth transmission member (423) is arranged on the third transmission member (422) and can move relative to the third transmission member (422), the fourth transmission member (423) is movably connected to the other end of the second link (41).

6. The adjusting device (50) for the onboard screen according to claim 5, wherein the first transmission member (322) is a first lead screw, the second transmission member (323) is a first lead screw nut, the third transmission member (422) is a second lead screw, and the fourth transmission member (423) is a second lead screw nut.

7. The adjusting device (50) for the onboard screen according to claim 6, wherein the central axis of the second lead screw is deflected towards the front passenger side, and the central axis of the first lead screw is parallel to the central axis formed between the front passenger and the driver.

8. The adjusting device (50) for the onboard screen according to claim 6 or 7, wherein a connecting bolt (7) is arranged at one end of both the first link (31) and the second link (41), the first link (31) and the second link (41) are hinged to both sides of the screen bracket (2) through the connecting bolt (7), and one end of the first lead screw nut is connected to the connecting bolt (7) at one end of the first link (31), and one end of the second lead screw nut is connected to the connecting bolt (7) at one end of the second link (41).

9. The adjusting device (50) for the onboard screen according to any one of claims 4 to 8, wherein further comprising a controller (304), the controller (304) is electrically connected to both the first driving assembly (32) and the second driving assembly (42) to control the start and stop of the first driving assembly (32) and the second driving assembly (42).

10. The adjusting device (50) for the onboard screen according to claim 9, wherein the controller (304) is configured to control the rotation speeds of the first driving assembly (32) and the second driving assembly (42) to be different, such that the moving stroke of the first link (31) is different from the moving stroke of the second link (41).

11. The adjusting device (50) for the onboard screen according to any one of claims 3 to 10, wherein one end of the third link (5) is movably connected to a position between the two ends of the second link (41) and forms a triangle with the line connecting the two ends of the second link (41), and the other end of the third link (5) is movably connected to a position between the two ends of the first link (31) and forms a straight line with the line connecting the two ends of the first link (31).

12. The adjusting device (50) for the onboard screen according to claim 11, wherein the position where the second link (41) is connected to the third link (5) is bent towards the third link (5), the second link (41) is an irregularly shaped link, the first link (31) is a straight link, and the third link (5) is an arc-shaped link.

13. The adjusting device (50) for the onboard screen according to any one of claims 1 to 12, wherein the angle at which the screen bracket (2) deflects towards the driver side and/or deflects towards the front passenger side is α, and α satisfies the relationship: 0°<α≤15°.

14. The adjusting device (50) for the onboard screen according to any one of claims 1 to 13, wherein the screen bracket (2) comprises a rotating mechanism (22), one end of the rotating mechanism (22) is configured to connect with the onboard screen (6), and the rotating mechanism (22) is configured to drive the onboard screen (6) to rotate around its center.

15. The adjusting device (50) for the onboard screen according to claim 14, wherein the rotating mechanism (22) comprises:
a third driving assembly (221), and
a rotating disk (222), one end of the rotating disk (222) is in transmission connection with the third driving assembly (221), and the other end is configured to connect with the onboard screen (6), the third driving assembly (221) drives the rotating disk (222) to rotate, so as to drive the onboard screen (6) to rotate.

16. An onboard screen assembly (100), comprising:
an onboard screen (6); and
the adjusting device (50) for the onboard screen according to any one of claims 1 to 15, wherein the onboard screen (6) is fixed on the screen bracket (2).

17. A vehicle (1000), comprising:
the onboard screen assembly (100) according to claim 16; and
a mounting base (1), wherein the onboard screen assembly (100) is fixed on the vehicle (1000) through the mounting base (1).
